# NEUE EUROPÄISCHE PATENTSCHRIFT

(11) **EP 2 125 434 B2**
(45) Veröffentlichungstag und Bekanntmachung des Hinweises auf die Entscheidung über den Einspruch: **10.12.2014**
(45) Hinweis auf die Patenterteilung: 04.08.2010
(21) Anmeldenummer: 08706816.9
(22) Anmeldetag: 28.01.2008
(51) Int. Cl.: B60R 11/02

(54) **Anordnung zur Einbindung eines portablen elektronischen Geräts**
Arrangement for receiving a portable electronic device
Arrangement pour recevoir un dispositif électronique portable

(30) Priorität: 29.01.2007 DE 102007005158
(43) Veröffentlichungstag der Anmeldung: 02.12.2009
(73) Patentinhaber: Peiker acustic GmbH & Co. KG, 61381 Friedrichsdorf (DE)
(72) Erfinder: PEIKER, Andreas, 61381 Friedrichsdorf (DE)
(74) Vertreter: Otten, Herbert
(86) Internationale Anmeldenummer: PCT/DE2008/000149
(87) Internationale Veröffentlichungsnummer: WO 2008/092429

(56) Entgegenhaltungen:
- WO-A1-01/61875
- WO-A1-95/28789
- WO-A1-97/25223
- WO-A1-98/11747
- WO-A1-98/40244
- WO-A2-02/057117
- DE-A1- 3 531 335
- DE-A1- 10 202 061
- DE-A1- 10 204 887
- DE-A1- 10 221 216
- DE-A1-102004 035 932
- DE-U1- 20 002 209
- DE-U1- 20 023 170
- US-A1- 2004 087 335

## Beschreibung

Die Erfindung betrifft eine Anordnung zur Einbindung eines portablen elektronischen Geräts.

Aus der WO 02/057117 A2 ist eine Anordnung zur Einbindung eines portablen, elektronischen Geräts in ein Fahrzeug bekannt, wobei die Anordnung eine Aufnahmevorrichtung mit einem Aufnahmebereich für das portable, elektronische Gerät aufweist und wobei die Aufnahmevorrichtung eine Schnittstelle zu dem portablen, elektronischen Gerät und eine Schnittstelle zu einer Haltevorrichtung aufweist, die eine Verbindung zu elektrischen und/oder elektronischen Bauteilen aufweist, welche in dem Fahrzeug angeordnet sind, wobei die Aufnahmevorrichtung körperlich wenigstens in ein Oberteil und ein Unterteil trennbar ist, wobei das Oberteil spezifisch auf ein bestimmtes Modell eines portablen, elektronischen Geräts angepasst ist, wobei im eingebauten Zustand eine Elektronik im Unterteil angeordnet ist, wobei das Unterteil mit einer Vielzahl von verschiedenen Oberteilen zu spezifischen Aufnahmevorrichtungen zusammenbaubar ist.

Der Erfindung liegt die Aufgabe zugrunde, eine Anordnung zu entwickeln, welche kostengünstig für eine Vielzahl von unterschiedlichen portablen, elektronischen Geräten herstellbar ist.

Diese Aufgabe wird von einer Anordnung mit den Merkmalen des Anspruchs 1 gelöst. In den Unteransprüchen sind vorteilhafte und zweckmäßige Weiterbildungen angegeben.

Die erfindungsgemäße Aufnahmevorrichtung ist körperlich wenigstens in ein Oberteil und ein Unterteil trennbar, wobei das Oberteil spezifisch auf ein bestimmtes Model eines portablen, elektronischen Geräts angepasst ist, wobei das Unterteil spezifisch auf eine Produktfamilie angepasst ist, wobei das Unterteil mit einer Vielzahl von verschiedenen Oberteilen zu spezifischen Aufnahmevorrichtungen zusammenbaubar ist oder wobei das Oberteil mit einer Vielzahl von verschiedenen Unterteilen zu weiteren spezifischen Aufnahmevorrichtungen zusammenbaubar ist. Hierdurch lassen sich aus einer vergleichsweise kleinen Zahl von Oberteilen und Unterteilen für eine große Zahl unterschiedlicher portabler, elektronischer Geräte passende Aufnahmevorrichtungen herstellen. Somit ist es nicht mehr erforderlich für jedes elektronische Gerät eine vollständige auf das Gerät spezialisierte Aufnahmevorrichtung zur Verfügung zu stellen. Vielmehr kann für portable, elektronische Geräte, welche identische oder kompatible Schnittstellenspezifikationen aufweisen, auf das gleiche Unterteil zurückgegriffen werden. Durch diese Kombinierbarkeit eines Unterteils mit einer Vielzahl von Oberteilen kann das Unterteil in einer größeren Stückzahl und damit auch kostengünstiger hergestellt werden. Identische und kompatible Schnittstellenspezifikationen finden sich in der Regel unter Geräten einer Produktfamilie eines Herstellers. Auch eine Kombination gleicher Oberteile mit unterschiedlichen Unterteilen ist denkbar, wenn beispielsweise bestimmte Funktionsmerkmale wie zum Beispiel ein GPS-Empfänger als Sonderausstattung durch ein spezielles Unterteil zur Verfügung gestellt werden und unterschiedliche elektronische Geräte mit dem gleichen Oberteil gehalten werden können. Kern der Erfindung ist eine Anpassung des Oberteils auf eine Vielzahl von unterschiedlichen, portablen, elektronischen Geräten und eine Kombination dieser Oberteile mit einer kleineren Zahl von Unterteilen, welche jeweils für mehrere unterschiedliche, portable, elektronische Geräte geeignet sind. Die Erfindung nutzt die Gemeinsamkeiten unterschiedlicher, portabler, elektronischer Geräte zu einer Kostenoptimierung bei der Herstellung von Aufnahmevorrichtungen, welche jeweils auf den einzelnen Gerätetyp spezialisiert sind.

Die Erfindung sieht im Oberteil den Aufnahmebereich vor, der als Aufnahmeraum auf geometrische Abmessungen des portablen, elektronischen Geräts angepasst ist. Hierdurch können die unterschiedlichen portablen, elektronischen Geräte sicher gehalten werden.

Weiterhin sieht die Erfindung vor, in dem Oberteil eine Koppelantenne anzuordnen, welche auf eine in dem portablen, elektronischen Gerät angeordnete Antenne ausgerichtet und angepasst ist. Hierdurch können auch Geräte ohne Antennestecker mit der erfindungsgemäßen Aufnahmevorrichtung betrieben werden.

Die Erfindung sieht vor, in dem Oberteil die Schnittstelle zu dem portablen, elektronischen Gerät anzuordnen. Hierdurch erfolgt eine vollständige Anpassung des Oberteils an das spezielle portable, elektronische Gerät.

Gemäß der Erfindung ist es vorgesehen, die Schnittstelle zu dem portablen, elektronischen Gerät als mehrpoligen Kontakt für den Datenaustausch und/oder als mehrpoligen Ladekontakt zur Übertragung von Energie an das portable, elektronische Gerät und/oder als Sende- und/oder Empfangseinrichtung für drahtlose Signale auszubilden. Hierdurch können die unterschiedlichsten portablen, elektronischen Geräte entsprechend ihren individuellen Erfordernissen in die Aufnahmeeinrichtung eingebunden werden.

Weiterhin sieht die Erfindung vor, die Schnittstelle durch ein transparentes als Lichtleiter verwendbares Bauteil aus einem Innenraum der Aufnahmevorrichtung heraus zu beleuchten. Hierdurch wird dem Nutzer auf eingängige Weise signalisiert wie das portable, elektronische Gerät in die Aufnahmevorrichtung einzulegen bzw. mit dem Aufnahmebereich des Oberteils zu koppeln ist, da sich der Nutzer regelmäßig der Lage der Schnittstelle an seinem portablen, elektronischen Gerät bewusst ist.

Insbesondere sieht die Erfindung vor, die Schnittstelle der Aufnahmevorrichtung zu dem portablen, elektronischen Gerät durch das transparente Bauteil in dem Aufnahmebereich an dem Oberteil zu halten. Hierdurch übernimmt das transparente Bauteil zusätzlich zu seiner Beleuchtungsfunktion eine Haltefunktion und führt so zu einer Aufnahmevorrichtung, welche aus wenigen Bauteilen besteht.

Weiterhin ist es vorgesehen, in dem Oberteil eine elektrische Spule anzuordnen, welche auf eine in dem portablen, elektronischen Gerät angeordnete Spule ausgerichtet ist, um einen Energiespeicher des portablen, elektronischen Geräts kontaktlos bzw. induktiv zu laden. Hierdurch kann auf elektrische Kontakte zur Energieübertragung verzichtet werden. Eine derartige Aufnahmevorrichtung ist somit beispielsweise auch für die Verwendung in Baustellenfahrzeugen geeignet, da die Energieübertagung auch durch eine hohe Staubbelastung nicht beeinträchtigt wird.

Die Erfindung sieht auch vor, an dem Oberteil und/oder dem Unterteil wenigstes ein Bedienelement anzuordnen. Hierdurch können besonders wichtige Funktionen des portablen, elektronischen Geräts oder Sonderfunktionen, welche durch die Aufnahmevorrichtung zur Verfügung gestellt werden, besonders einfach angewählt werden. Beispielsweise ist die Belegung eines derartigen Bedienelements mit einer Notruffunktion vorgesehen.

Insbesondere sieht die Erfindung vor, das Bedienelement als elektromechanischen Taster oder elektromechanischen Schalter oder als elektronischen Taster oder als berührungssensitive Anzeigeeinrichtung bzw. sogenannten touch screen auszubilden, um dieses den jeweiligen Erfordernissen optimal anzupassen.

Insbesondere ist es gemäß der Erfindung vorgesehen, den elektronischen Taster als kapazitiven Taster auszubilden, welcher auf eine Kapazitätsänderung oder eine Störeinkopplung durch einen sich annähernden Finger reagiert. Hierdurch kann die Aufnahmeeinrichtung im Bereich des oder der Bedienelemente leicht und dennoch stabil ausgebildet werden, da im Gehäuse keine Durchbrüche für bewegliche Bauteile vorgesehen werden müssen.

Erfindungsgemäß sieht die Erfindung vor, in dem Unterteil eine Elektronik anzuordnen. Die vergleichsweise teuere Elektronik kann auf diese Weise für eine Vielzahl von Oberteilen bzw. portablen, elektronischen Geräten Verwendung finden und somit kostengünstig in größerer Stückzahl hergestellt werden.

Weiterhin ist es vorgesehen, zwischen dem Unterteil und dem Oberteil beim Zusammenfügen eine Datenverbindung zur Datenübertragung und/oder Energieverbindung zur Energieübertragung herzustellen. Hierdurch ist eine zeitsparende Endmontage gewährleistet.

Insbesondere ist eine drahtlose Datenübertragung zwischen dem Unterteil und dem Oberteil vorgesehen. Hierdurch kann auf sensible Kontaktelemente zwischen dem Oberteil und dem Unterteil verzichtet werden.

Es ist auch eine drahtlose Energieübertragung zwischen dem Unterteil und dem Oberteil vorgesehen. Auch hierdurch wird ein Zusammenfügen bzw. Trennen des Oberteils und des Unterteils erleichtert.

Schließlich sieht die Erfindung am Unterteil und/oder am Oberteil einen Schacht zur Aufnahme und Kontaktierung von Datenspeichern und/oder Modulen vor. Dies ermöglicht eine Nachrüstung der Aufnahmevorrichtung mit Speicher, Rechenleistung oder zusätzlichen Funktionen. Beispielsweise ist als Modul eine GSM-Empfänger vorgesehen.

Weitere Einzelheiten der Erfindung werden in der Zeichnung anhand von schematisch dargestellten Ausführungsbeispielen beschrieben.

Hierbei zeigt:
- Figur 1: Draufsicht auf eine erfindungsgemäße Aufnahmevorrichtung;
- Figur 2:: Seitenansicht der in der Figur 1 gezeigten Aufnahmevorrichtung;
- Figur 3:: geschnittene Ansicht der in der Figur 2 gezeigten Aufnahmevorrichtung in Explosionsdarstellung;
- Figur 4:: schematische Darstellung der Zusammenstellung von Aufnahmevorrichtungen für eine erste Gerätefamilie;
- Figur 5:: schematische Darstellung der Zusammenstellung von Aufnahmevorrichtungen für eine zweite Gerätefamilie und
- Figur 6:: eine schematische Darstellung einer zweiten erfindungsgemäßen Aufnahmevorrichtung.

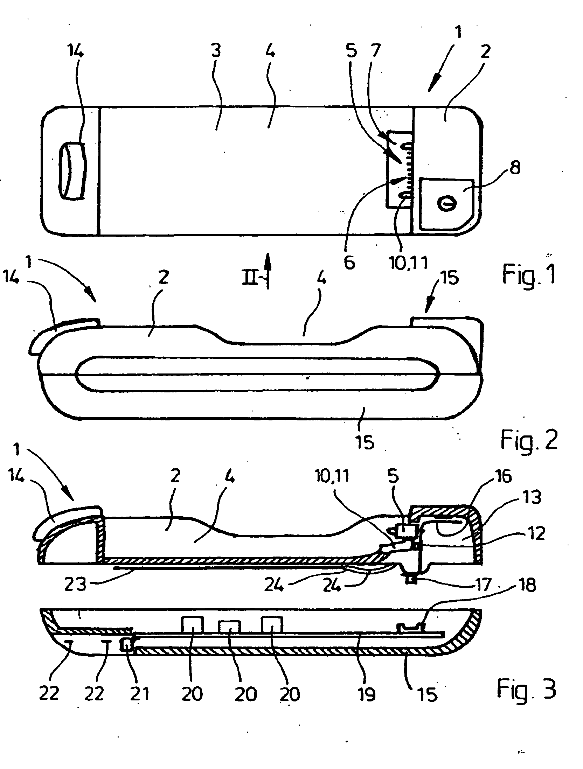

In der Figur 1 ist eine Aufnahmevorrichtung 1 in Draufsicht dargestellt. In der Draufsicht ist ein Oberteil 2 der Aufnahmevorrichtung 1 sichtbar. Das Oberteil 2 weist einen Aufnahmebereich 3 für ein nicht dargestelltes portables, elektronisches Gerät auf. Der Aufnahmebereich 3 ist als Aufnahmeraum 4 ausgebildet, welcher auf geometrische Abmessungen des nicht dargestellten portablen, elektronischen Geräts abgestimmt ist. In dem Aufnahmeraum 4 ist eine Schnittstelle 5 angeordnet, über welche das nicht dargestellte portable, elektronische Gerät kontaktierbar ist, um Daten und Energie zu übertragen. Die Schnittsstelle 5 besteht aus einem mehrpoligen Kontakt 6 zur Datenübertragung und einem mehrpoligen Kontakt 7 zur Energieübertragung, wobei unter der Datenübertragung ggf. auch die Übertragung von Antennensignalen zu verstehen ist. Neben dem Aufnahmeraum 4 ist auf dem Oberteil 2 der Aufnahmevorrichtung 1 ein Bedienelement 8 angeordnet. Das Bedienelement 8 ist als elektronischer Taster 9 ausgeführt, welcher als wesentliches Bauteil einen kapazitiven Sensor umfasst, welcher auf eine Berührung des Bedienelements 8 durch einen Finger reagiert. Durch das Bedienelement 8 ist die Aufnahmevorrichtung 1 aktivierbar bzw. deaktivierbar. Die Schnittstelle 5 ist durch ein Bauteil 10, insbesondere einen durchsichtigen Rahmen, an dem Oberteil 2 befestigt. Das Bauteil 10 weist Eigenschaften eines Lichtleiters 11 auf und wird von einer Leuchtdiode 12 aus einem Innenraum 13 des Oberteils 2 heraus durchleuchtet (siehe auch Figur 3). Auf dem Oberteil 2 ist weiterhin eine Entriegelungstaste 14 angeordnet, über welche das nicht dargestellte, elektronische Gerät aus dem Aufnahmeraum 4 ausgeworfen werden kann.

In der Figur 2 ist die aus der Figur 1 bekannte Aufnahmevorrichtung 1 in Seitenansicht aus einer Pfeilrichtung II gezeigt. In der Seitenansicht ist nun unter dem Oberteil 2 auch ein Unterteil 15 sichtbar. Das Oberteil 2 und das Unterteil 15 sind zu der Aufnahmeeinrichtung 1 zusammengesetzt.

In der Figur 3 ist die in der Figur 2 gezeigte Aufnahmevorrichtung 1 nun geschnitten und in Explosionsdarstellung gezeigt. Das Oberteil 2 umfasst neben den oben beschriebenen Bauteilen auch eine flexible Leiterplatte 16, welche den elektronischen Taster 9, die Schnittstelle 5 und die Leuchtdiode 12 mit einer weiteren Schnittstelle 17 verbindet. Diese Schnittstelle 17 dient zur Übertragung von Daten und/oder Energie zwischen dem Oberteil 2 und dem Unterteil 15. Die Schnittstelle 17 wirkt mit einer Schnittstelle 18 im Unterteil 15 zusammen, wenn das Oberteil 2 und das Unterteil 15 - wie in der Figur 2 gezeigt - zusammengefügt sind. Die Schnittstelle 18 ist im Unterteil 15 auf einer Hauptleiterplatte 19 angeordnet. Auf der Hauptleiterplatte 19 ist Elektronik 20 bzw. sind elektronische Bauteile angeordnet, welche für mehrere Typen von portablen, elektronischen Geräten verwendbar sind. Mit der Hauptleiterplatte 19 ist weiterhin eine Schnittstelle 21 verbunden, über welche die Aufnahmevorrichtung 1 - ggf. unter Zwischenschaltung wenigstens eines weiteren Bauteils - mit im Fahrzeug angeordneten, nicht dargestellten elektrischen und/oder elektronischen Bauteile kontaktierbar ist. An dem Unterteil 15 sind Führungen 22 ausgebildet, welche die Kontaktierung der Schnittstelle 21 durch eine weitere, nicht dargestellte Schnittstelle erleichtern und auch ein mechanisches Befestigen bzw. Halten der Aufnahmeeinrichtung 1 an dem nicht dargestellten Fahrzeug ermöglichen. Schließlich zeigt die Figur 3 noch eine Koppelantenne 23, welche an dem Oberteil 2 unterhalb des Aufnahmeraums 4 angeordnet ist. Über diese Koppelantenne 23 kann das Antennensignal eines in dem Aufnahmeraum 4 liegende, nicht dargestellten, portablen, elektronischen Geräts abgegriffen werden, um dieses an eine nicht dargestellte Außenantenne des Fahrzeugs zu leiten. Die Koppelantenne 23 ist über Signalleitungen 24 mit der flexiblen Leiterplatte 16 verbunden.

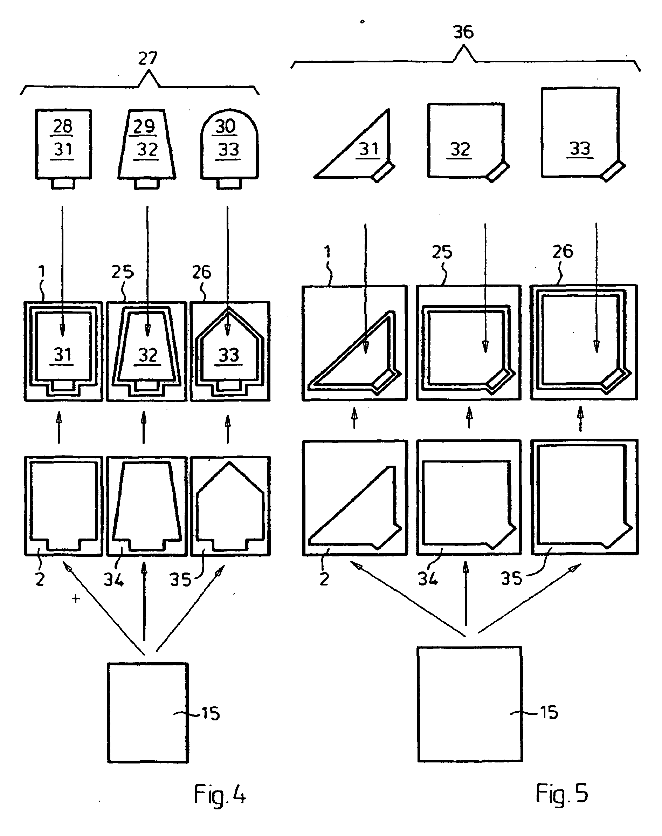

In der Figur 4 sind verschiedene Aufnahmevorrichtungen 1, 25 und 26 für eine Familie 27 aus verschiedenen portablen, elektronischen Geräten 28, 29 und 30 dargestellt. Die portablen, elektronischen Geräte 28, 29 und 30 sind als Mobiltelefone 31, 32 und 33 ausgeführt. Die einzelnen Aufnahmevorrichtungen 1, 25, 26 werden aus gleichen Unterteilen 15 und unterschiedlichen Oberteilen 2, 34 und 35 zu den Aufnahmevorrichtungen 1, 25 und 26 zusammengesetzt. In den gleichen Unterteilen 15 sind im wesentlichen diejenigen elektronischen Bauteile angeordnet, welche für die Mobiltelefone 31, 32 und 33 der Familie 27 in gleicher Weise verwendbar sind.

Analog zur Figur 4 ist in der Figur 5 eine weitere Familie 36 von Mobiltelefonen 31, 32 und 33 dargestellt. Auch für diese Mobiltelefone 31, 32 und 33 werden individuelle Aufnahmevorrichtungen 1, 25 und 26 aus gleichen Unterteilen 15 und auf die einzelnen Mobiltelefone 31, 32 und 33 spezialisierten Oberteile 2, 34 und 35 zusammengesetzt.

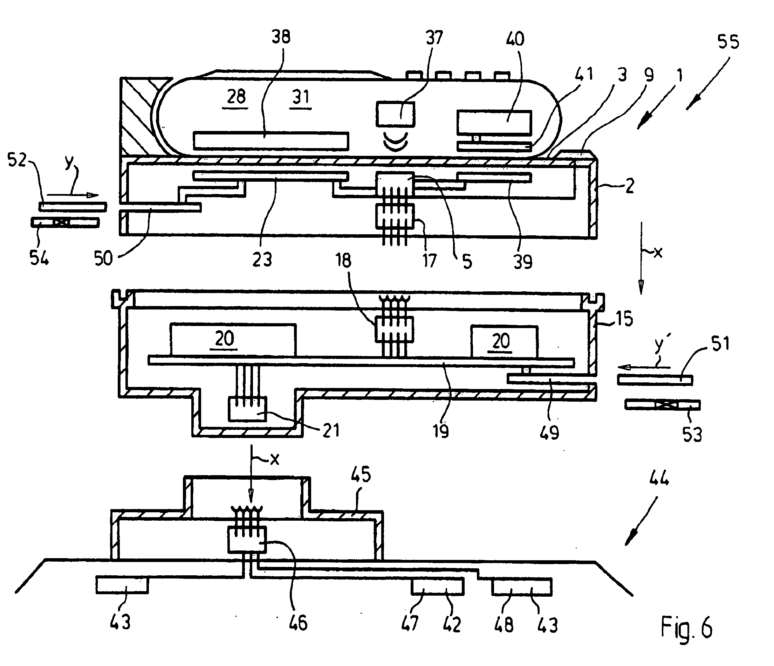

Die Figur 6 zeigt eine schematische Darstellung einer zweiten erfindungsgemäßen Aufnahmevorrichtung 1. Die Aufnahmevorrichtung 1 besteht aus zwei zusammensetzbaren Halbschalen, welche als Oberteil 2 und als Unterteil 15 ausgeführt sind. In einem Aufnahmebereich 3 des Oberteils 2 ist ein Mobiltelefon 31 als portables, elektronisches Gerät 28 abgelegt. In dem Oberteil 2 ist eine Schnittstelle 5 angeordnet, über welche das Oberteil 2 drahtlos mit einer Schnittstelle 37 des Mobiltelefons 31 kommuniziert. Eine Antenne 38 des Mobiltelefons 31 wirkt mit einer Koppelantenne 23 zusammen, welche ebenfalls in dem Oberteil 2 angeordnet ist. Über eine elektrische Spule 39 des Oberteils 2 ist es möglich, eine wiederaufladbare Batterie 40 des Mobiltelefons 31 mit Energie zu versorgen, wobei zum Empfang der Energie eine Spule 41 dient, welche in dem Mobiltelefon 31 angeordnet ist. Über einen elektrischen Taster 9 kann die Aufnahmevorrichtung 1 eingeschaltet bzw. abgeschaltet werden. Durch ein Aufsetzen des Oberteils 2 auf das Unterteil 15 in eine Pfeilrichtung x werden Schnittstellen 17 und 18 miteinander kontaktiert. Über eine in dem Unterteil 15 angeordnete Hauptleiterplatte 19 steht die Schnittstelle 18 in Verbindung mit auf der Hauptleiterplatte 19 angeordneter Elektronik 20 und in Verbindung mit einer weiteren Schnittstelle 21. Zur Kontaktierung von elektrischen Bauteilen 42 und elektronischen Bauteilen 43 in einem Fahrzeug 44 wird die gesamte Aufnahmevorrichtung 1 in die Pfeilrichtung x auf eine Haltevorrichtung 45 gesetzt, welche eine Schnittstelle 46 aufweist, die dann in Kontakt mit der Schnittstelle 21 des Unterteils 15 steht. Durch die Haltevorrichtung 45 ist die Aufnahmevorrichtung 1 somit mechanisch gehalten und elektrisch kontaktiert. Über die Schnittstelle 46 sind die elektrischen Bauteile 42 und die elektronischen Bauteile 43 angeschlossen. Unter einem elektrischen Bauteil 42 wird im Sinne der Erfindung beispielsweise ein in dem Fahrzeug 44 angeordneter elektromechanischer Schalter 47 verstanden. Unter einem elektronischen Bauteil 43 wird im Sinne der Erfindung beispielsweise eine in dem Fahrzeug 44 angeordnete Anzeigevorrichtung 48 verstanden. Das Unterteil 15 und das Oberteil 2 der Aufnahmevorrichtung weisen weiterhin je einen Schacht 49, 50 auf, in welchen beispielsweise elektronische Speicherkarten 51, 52 oder GSM-Module 53, 54 in eine Pfeilrichtung y' bzw. y einschiebbar ist, um die Aufnahmevorrichtung 1 mit zusätzlichen Funktionen auszustatten. Zusammen mit der Aufnahmevorrichtung 1 bildet die Haltevorrichtung 45 eine Halte- und Aufnahmevorrichtung 55.

Die Erfindung ist nicht auf dargestellte oder beschriebene Ausführungsbeispiele beschränkt. Sie umfasst vielmehr Weiterbildungen der Erfindung im Rahmen der Schutzrechtsansprüche. Insbesondere sieht die Erfindung auch vor, dass die Aufnahmevorrichtung zwei und mehr portable, elektronische Geräte aufnimmt.

### Bezugszeichenliste:

- 1: Aufnahmevorrichtung
- 2: Oberteil von 1
- 3: Aufnahmebereich von 2
- 4: Aufnahmeraum von 2
- 5: Schnittstelle an 2 zu 28, 29 bzw. 30
- 6: mehrpoliger Datenkontakt von 5
- 7: mehrpoliger Ladekontakt von 5
- 8: Bedienelement
- 9: elektronischer Taster
- 10: Bauteil zur Befestigung von 5
- 11: Lichtleiter
- 12: Leuchtdiode in 13
- 13: Innenraum von 2
- 14: Entriegelungstaste an 2
- 15: Unterteil von 1
- 16: flexible Leiterplatte in 2
- 17: Schnittstelle von 2 zu 15
- 18: Schnittstelle von 15 zu 2
- 19: Hauptleiterplatte in 15
- 20: Elektronik in 15
- 21: Schnittstelle von 15 zu 45
- 22: Führung an 15
- 23: Koppelantenne in 2
- 24: Signalleitung von 23 zu 16
- 25: zweite Aufnahmevorrichtung
- 26: dritte Aufnahmevorrichtung
- 27: Familie von portablen, elektronischen Geräten
- 28: erstes portables, elektronisches Gerät
- 29: zweites portables, elektronisches Gerät
- 30: drittes portables, elektronisches Gerät
- 31: erstes Mobiltelefon
- 32: zweites Mobiltelefon
- 33: drittes Mobiltelefon
- 34: zweites Oberteil
- 35: drittes Oberteil
- 36: Familie von portablen, elektronischen Geräten
- 37: Schnittstelle von 28 bzw. 31
- 38: Antenne von 31
- 39: elektrische Spule in 5
- 40: wiederaufladbare Batterie in 31
- 41: Spule in 31
- 42: elektrisches Bauteil in 44
- 43: elektronisches Bauteil in 44
- 44: Fahrzeug
- 45: Haltevorrichtung für 1
- 46: Schnittstelle in 45
- 47: Schalter
- 48: Anzeigeeinrichtung
- 49: Schacht in 15
- 50: Schacht in 2
- 51: Speicherkarte
- 52: Speicherkarte
- 53: GSM-Modul
- 54: GSM-Modul
- 55: Halte- und Aufnahmevorrichtung
- x: Pfeilrichtung
- y: Pfeilrichtung
- y': Pfeilrichtung

## Patentansprüche

1. Anordnung zur Einbindung eines portablen, elektronischen Geräts (28, 29, 30), insbesondere eines Mobiltelefons (31, 32, 33) in ein Fahrzeug (44), wobei die Anordnung eine Aufnahmevorrichtung (1, 25, 26) mit einem Aufnahmebereich (3) für das portable, elektronische Gerät (28, 29 30) aufweist und wobei die Aufnahmevorrichtung (1, 25, 26) eine Schnittstelle (5) zu dem portablen, elektronischen Gerät (28, 29, 30) und eine Schnittstelle (21) zu einer Haltevorrichtung (45) aufweist, die eine Verbindung zu elektrischen und/oder elektronischen Bauteilen (42, 43, 47, 48) aufweist, welche in dem Fahrzeug (44) angeordnet sind, wobei die Aufnahmevorrichtung (1, 25, 26) körperlich wenigstens in ein Oberteil (2, 34, 35) und ein Unterteil (15) trennbar ist, wobei das Oberteil (2, 34, 35) spezifisch auf ein bestimmtes Modell eines portablen, elektronischen Geräts (28, 29, 30) angepasst ist, wobei das Unterteil (15) spezifisch auf eine Produktfamilie (27, 36) eines Herstellers von portablen, elektronischen Geräten (28, 29, 30) mit identischen und kompatiblen Schnittstellenspezifikationen angepasst ist, wobei in dem Unterteil (15) eine Elektronik (20) angeordnet ist, wobei das Unterteil (15) mit einer Vielzahl von verschiedenen Oberteilen (2, 34, 35) zu spezifischen Aufnahmevorrichtungen (1, 25, 26) zusammenbaubar ist oder wobei das Oberteil (2, 34, 35) mit einer Vielzahl von verschiedenen Unterteilen (15) zu weiteren spezifischen Aufnahmevorrichtungen (1, 25, 26) zusammenbaubar ist.

2. Vorrichtung nach Anspruch 1, **dadurch gekennzeichnet, dass** das Oberteil (2, 34, 35) eine Schnittstelle (17) aufweist, dass das Unterteil (15) eine Schnittstelle (18) aufweist und wobei das Oberteil (2, 34, 35) und das Unterteil (15) durch ein Zusammenfügen des Oberteils (2, 34, 35) und des Unterteils (15) über diese Schnittstellen (17, 18) miteinander kontaktierbar sind.

3. Vorrichtung nach einem oder mehreren der vorhergehenden Ansprüche, **dadurch gekennzeichnet, dass** das Oberteil (2, 34, 35) den Aufnahmebereich (3) aufweist, der als Aufnahmeraum (4) auf geometrische Abmessungen des portablen, elektronischen Geräts angepasst (28, 29, 30) ist.

4. Vorrichtung nach einem oder mehreren der vorhergehenden Ansprüche, **dadurch gekennzeichnet, dass** in dem Oberteil (2, 34, 35) eine Koppelantenne (23) angeordnet ist, welche auf eine in dem portablen, elektronischen Gerät (28, 29, 30) angeordnete Antenne (38) ausgerichtet ist.

5. Vorrichtung nach einem oder mehreren der vorhergehenden Ansprüche, **dadurch gekennzeichnet, dass** in dem Oberteil (2, 34, 35) die Schnittstelle (5) zu dem portablen, elektronischen Gerät (28, 29, 30) angeordnet ist, wobei die Schnittstelle (5) zu dem portablen, elektronischen Gerät (28, 29, 30) insbesondere als mehrpoliger Datenkontakt (6) für den Datenaustausch und/oder als mehrpoliger Ladekontakt (7) zur Übertragung von Energie an das portable, elektronische Gerät (28, 29 30) und/oder als Sende- und/oder Empfangseinrichtung für drahtlose Signale ausgebildet ist.

6. Vorrichtung nach einem oder mehreren der vorhergehenden Ansprüche, **dadurch gekennzeichnet, dass** die Schnittstelle (5) durch ein transparentes als Lichtleiter (11) verwendbares Bauteil (10) aus einem Innenraum (13) der Aufnahmevorrichtung (1, 25, 26) heraus beleuchtbar ist, wobei die Schnittstelle (5) insbesondere durch das transparente Bauteil (10) in dem Aufnahmebereich (3) an dem Oberteil (2, 34, 35) gehalten ist.

7. Vorrichtung nach einem oder mehreren der vorhergehenden Ansprüche, **dadurch gekennzeichnet, dass** in dem Oberteil (2, 34, 35) eine elektrische Spule (39) angeordnet ist, welche auf eine in dem portablen, elektronischen Gerät angeordnete Spule (41) ausgerichtet ist, um eine wiederaufladbare Batterie (41) des portablen, elektronischen Geräts (28, 29, 30) induktiv zu laden.

8. Vorrichtung nach einem oder mehreren der vorhergehenden Ansprüche, **dadurch gekennzeichnet, dass** an dem Oberteil (2, 34, 35) und/oder dem Unterteil (15) wenigstes ein Bedienelement (8) angeordnet ist.

9. Vorrichtung nach Anspruch 8, **dadurch gekennzeichnet, dass** das Bedienelement (8) als elektromechanischer Taster oder elektromechanischer Schalter oder als elektronischer Taster (9) oder als berührungssensitive Anzeigeeinrichtung ausgebildet ist.

10. Vorrichtung nach Anspruch 9, **dadurch gekennzeichnet, dass** der elektronische Taster (9) als kapazitiver Taster ausgebildet ist, welcher auf eine Kapazitätsänderung oder eine Störeinkopplung durch einen sich annähernden Finger reagiert.

11. Vorrichtung nach einem oder mehreren der vorhergehenden Ansprüche, **dadurch gekennzeichnet, dass** zwischen dem Unterteil (15) und dem Oberteil (2, 34, 35) beim Zusammenfügen eine Datenverbindung zur Datenübertragung und/oder Energieverbindung zur Energieübertragung herstellbar ist.

12. Vorrichtung nach einem oder mehreren der vorhergehenden Ansprüche, **dadurch gekennzeichnet, dass** die Datenübertragung zwischen dem Unterteil (15) und dem Oberteil (2, 34, 35) drahtlos erfolgt.

13. Vorrichtung nach einem oder mehreren der vorhergehenden Ansprüche, **dadurch gekennzeichnet, dass** die Energieübertragung zwischen dem Unterteil (15) und dem Oberteil (2, 34, 35) drahtlos erfolgt.

14. Vorrichtung nach einem oder mehreren der vorhergehenden Ansprüche, **dadurch gekennzeichnet, dass** das Unterteil (15) und/oder das Oberteil (2, 34, 35) einen Schacht (49, 50) zur Aufnahme und Kontaktierung von Speicherkarten (51, 52) und/oder Modulen (53, 54) aufweist.

## Claims

1. Arrangement for incorporating a portable, electronic device (28, 29, 30), in particular a mobile phone (31, 32, 33) into a vehicle (44), wherein the arrangement comprises a mounting device (1, 25, 26) with a receiving area (3) for the portable, electronic device (28, 29, 30), and wherein the mounting device (1, 25, 26) comprises an interface (5) to the portable, electronic device (28, 29, 30), and an interface (21) to a holding apparatus (45), which has a connection to electrical and/or electronic components (42, 43, 47, 48) that are arranged in the vehicle (44), wherein the mounting device (1, 25, 26) can be separated physically into at least one top part (2, 34, 35) and one bottom part (15), wherein the top part (2, 34, 35) is specifically adapted to a particular model of a portable, electronic device (28, 29, 30), wherein the bottom part (15) is adjusted specifically to a product family (27, 36) of a manufacturer of portable, electronic devices (28, 29, 30) with identical and compatible interface specifications, wherein in the bottom part (15) an electronic system (20) is arranged, wherein the bottom part (15) can be assembled with a plurality of different top parts (2, 34, 35) to form specific mounting devices (1, 25, 26) or wherein the top part (2, 34, 35) can be assembled with a plurality of different bottom parts (15) to form further specific mounting devices (1, 25, 26).

2. Device according to claim 1, **characterised in that** the top part (2, 34, 35) has an interface (17), **in that** the bottom part (15) has an interface (18), and wherein the top part (2, 34, 35) and the bottom part (15) are brought into contact with one another by joining together the top part (2, 34, 35) and the bottom part (15) via said interfaces (17, 18).

3. Device according to one or more of the preceding claims, **characterised in that** the top part (2, 34, 35) comprises the receiving area (3), which as a receiving space (4) is adjusted to the geometrical dimensions of the portable electronic device (28, 29, 30).

4. Device according to one or more of the preceding claims, **characterised in that** in the top part (2, 34, 35) a coupling aerial (23) is arranged, which is aligned with an aerial (38) arranged in the portable, electronic device (28, 29, 30).

5. Device according to one or more of the preceding claims, **characterised in that** in the top part (2, 34, 35) the interface (5) to the portable electronic device (28, 29, 30) is arranged, whereby the interface (5) to the portable, electronic device (28, 29, 30) is designed in particular as a multiterminal data contact (6) for the data exchange and/or as a multiterminal charging contact (7) for transmitting power to the portable, electronic device (28, 29, 30) and/or as a transmitting and/or receiving device for wireless signals.

6. Device according to one or more of the preceding claims, **characterised in that** the interface (5) can be illuminated by a transparent component (10) which can be used as a fibre-optic conductor (11) from an inner chamber (13) of the mounting device (1, 25, 26), whereby the interface (5) is held in particular by the transparent component (10) In the receiving area (3) on the top part (2, 34, 35).

7. Device according to one or more of the preceding claims, **characterised in that** in the top part (2, 34, 35) an electrical coil (39) is arranged, which is aligned with a coil (41) arranged in the portable, electronic device, in order to inductively charge a rechargeable battery (41) of the portable, electronic device (28, 29, 30).

8. Device according to one or more of the preceding claims, **characterised in that** at least one operating element (8) is arranged on the top part (2, 34, 35) and/or the bottom part (15).

9. Device according to claim 8, **characterised in that** the operating element (8) is designed as an electromechanical pushbutton or as an electromechanical switch or as an electronic pushbutton (9) or as a touch-sensitive display device.

10. Device according to claim 9, **characterised in that** the electronic pushbutton (9) is a capacitive pushbutton, which reacts to a change in capacitance or a faulty connection by an approaching finger.

11. Device according to one or more of the preceding claims, **characterised in that** between the bottom part (15) and the top part (2, 34, 35) when joining them together a data connection can be formed for data transmission and/or a power connection for power transmission.

12. Device according to one or more of the preceding claims, **characterised in that** the data transmission between the bottom part (15) and the top part (2, 34, 35) takes place wirelessly.

13. Device according to one or more of the preceding claims, **characterised in that** the power transmission between the bottom part (15) and the top part (2, 34, 35) is wireless.

14. Device according to one or more of the preceding claims, **characterised in that** the bottom part (15) and/or the top part (2, 34, 35) comprises a shaft (49, 50) for receiving and making contact with memory cards (51, 52) and/or modules (53, 54).

## Revendications

1. Dispositif pour installer un appareil électronique portable (28, 29, 30) notamment un téléphone mobile (31, 32, 33) dans un véhicule (44), le dispositif comportant un dispositif de réception (1, 25, 26) avec une zone de réception (3) pour l'appareil électronique portable (28, 29, 30) et le dispositif de réception (1, 25, 26) comportant une interface (5) pour l'appareil électronique portable (28, 29, 30) et une interface (21) vers un dispositif de fixation (45) ayant une liaison avec des composants électriques et/ou électroniques (42, 43, 47, 48) du véhicule (44),
dispositif dans lequel
le dispositif de réception (1, 25, 26) peut se subdiviser matériellement en au moins une partie supérieure (2, 34, 35) et une partie inférieure (15),
la partie supérieure (2, 34, 35) étant adaptée spécifiquement à un modèle déterminé d'appareil électronique portable (28, 29, 30),
la partie inférieure (15) étant adaptée spécifiquement à une famille de produits (27, 36) d'un fabricant d'appareils électroniques portables (28, 29, 30) ayant des spécifications d'interfaces identiques et compatibles, une électronique (20) étant installée dans la partie inférieure (15),
la partie inférieure (15) pouvant être assemblée à de nombreuses parties supérieures différentes (2, 34, 35) pour des dispositifs de réception spécifiques (1, 25, 26) ou la partie supérieure (2, 34, 35) pouvant être assemblée par un grand nombre de parties inférieures différentes (15) pour d'autres dispositifs de réception spécifiques (1, 25, 26).

2. Dispositif selon la revendication 1,
**caractérisé en ce que**
la partie supérieure (2, 34, 35) comporte une interface (17),
la partie inférieure (15) comporte une interface (18) et
la partie supérieure (2, 34, 35) et la partie inférieure (15) peuvent être branchées par l'assemblage de la partie supérieure (2, 34, 35) et de la partie inférieure (15) par ces interfaces (17, 18).

3. Dispositif selon l'une ou plusieurs des revendications précédentes, **caractérisé en ce que**
la partie supérieure (2, 34, 35) comporte la partie de réception (3) en forme de cavité de réception (4) adaptée aux dimensions géométriques de l'appareil électronique portable (28, 29, 30).

4. Dispositif selon l'une ou plusieurs des revendications précédentes, **caractérisé en ce que**
la partie supérieure (2, 34, 35) comporte une antenne de couplage (23) alignée sur une antenne (38) installée dans l'appareil électronique portable (28, 29, 30).

5. Dispositif selon l'une ou plusieurs des revendications précédentes, **caractérisé en ce que**
la partie supérieure (2, 34, 35) comporte l'interface (5) vers l'appareil électronique portable (28, 29, 30),
l'interface (5) vers l'appareil électronique portable (28, 29, 30) étant réalisé notamment comme contact multipolaire de données (6) pour l'échange de données et/ou comme contact multipolaire de chargement (7) pour fournir l'énergie à l'appareil électronique portable (28, 29, 30) et/ou comme installation d'émission et/ou de réception pour des signaux transmis sans fil.

6. Dispositif selon l'une ou plusieurs des revendications précédentes, **caractérisé en ce que**
l'interface (5) qui peut être éclairée par un composant (10) transparent, utilisable comme guide de lumière (11) à partir du volume intérieure (13) du dispositif de réception (1, 25, 26),
l'interface (5) étant, en particulier, tenue par le composant transparent (10) dans la zone de réception (3) contre la partie supérieure (2, 34, 35).

7. Dispositif selon l'une ou plusieurs des revendications précédentes, **caractérisé par**
une bobine électrique (39) installée dans la partie supérieure (2, 34, 35) alignée sur une bobine (41) dans l'appareil électronique portable pour charger une batterie rechargeable (41) de l'appareil électronique portable (28, 29, 30) par induction.

8. Dispositif selon l'une ou plusieurs des revendications précédentes, **caractérisé en ce qu'**
au moins un élément de manoeuvre (8) équipe la partie supérieure (2, 34, 35) et/ou la partie inférieure (15).

9. Dispositif selon la revendication 8,
**caractérisé en ce que**
l'élément de manoeuvre (8) est une touche électromécanique ou un commutateur électromécanique ou une touche électronique (9) ou encore un dispositif d'affichage tactile.

10. Dispositif selon la revendication 9,
**caractérisé en ce que**
la touche électronique (9) est une touche capacitive réagissant à une variation de capacité ou à un couplage parasite ou par l'approche d'un doigt.

11. Dispositif selon l'une ou plusieurs des revendications précédentes, **caractérisé en ce qu'**
une liaison de transmission de données et/ou une liaison d'alimentation en énergie pour transmettre de l'énergie est réalisable entre la partie inférieure (15) et la partie supérieure (2, 34, 35) pendant l'assemblage.

12. Dispositif selon l'une ou plusieurs des revendications précédentes, **caractérisé en ce que**
la transmission de données entre la partie inférieure (15) et de la partie supérieure (2, 34, 35) se fait par une liaison sans fil.

13. Dispositif selon l'une ou plusieurs des revendications précédentes, **caractérisé en ce que**
la transmission d'énergie entre la partie inférieure (15) et la partie supérieure (2, 34, 35) se fait par une liaison sans fil.

14. Dispositif selon l'une ou plusieurs des revendications précédentes, **caractérisé en ce que**
la partie inférieure (15) et/ou la partie supérieure (2, 34, 35) comportent une cavité (49, 50) pour recevoir et pour brancher des cartes de mémoire (51, 52) et/ou des modules (53, 54).
